# EUROPEAN PATENT APPLICATION

(11) **EP 2 816 265 A1**
(43) Date of publication of application: **24.12.2014**
(21) Application number: 14172577.0
(22) Date of filing: 16.06.2014
(51) Int. Cl.: F16K 1/46, F16K 1/38

(54) **Valve sealing assembly**

(30) Priority: 18.06.2013 IL 22702613
(71) Applicant: Egmo Ltd., 2231101 Nahariya (IL)
(72) Inventor: Rada, Arie, 2242409 Nahariya (IL)
(74) Representative: Pearl Cohen Zedek Latzer Baratz UK LLP

(57) **Abstract**

A valve assembly and a method for use, including a seat (70) with one or a plurality of grooves along a periphery of the seat (70), the seat (70) comprising a gasket (20) inserted within the one or a plurality of grooves, with a portion of the gasket (20) raised above an external surface of the seat (70), and a piston (60), having a first face configured to matchingly cover a portion of the seat and a second fact to matchingly cover a portion of the gasket (20), configured to apply pressure to the gasket (20) to cause expansion of the gasket (20) within the one or a plurality of grooves, forming a tight seal between the gasket (20) and the face of the piston (60).

## Description

### FIELD OF THE INVENTION

The present invention relates to a valve sealing assembly.

### BACKGROUND OF THE INVENTION

Valves regulate directly or otherwise control flow. Typically this is done by obstructing or removing, wholly or partially, an obstruction to the flow within the valve. When fluids flow through valves they may flow from a higher pressure to a lower pressure. Valves can be manual, automatic or semiautomatic and may interface with simple to complex control systems, and be part of simple or complex piping systems.

Valves can be classified by their type of actuation, their size or other characteristics. Valves may have a seat, i.e., the interior surface of the body of the valve which contacts with the movable obstruction, e.g., a disc to form a tight seal. This seal may be configured to prevent leaks. Depending on the type of valve, the disc may be in constant or temporal contact with the seat. E.g., valves that contain discs that move linearly to remove the obstruction are only in contact with the seat periodically, i.e., when the valve is shut. In valves where the disc rotates to allow for flow, the disc is in constant contact with the seat. Valve seats typically remain stationary with reference to the body of the valve. Some seats are fitted to the valve body and may include softer materials to maintain a tight seal. Some seats are hard seats, i.e., they are integral to the body of the valve and made of the same or similar materials (e.g. steel).

### SUMMARY OF THE INVENTION

In one aspect there is provided in the following a valve assembly including a seat with one or a plurality of grooves along a periphery of the seat, the seat including a gasket inserted within the one or a plurality of grooves, with a portion of the gasket raised above an external surface of the seat and, a piston having a face configured to matchingly cover a portion of the seat and apply pressure to the gasket to cause expansion of the gasket within the one or a plurality of grooves, forming a tight seal between the gasket and the face of the piston. In another aspect there is provided a valve having a valve sealing assembly as just described.

Furthermore, in accordance with some embodiments of the present invention one or a plurality of grooves of the valve sealing assembly comprises three expansion spaces.

Furthermore, in accordance with some embodiments of the present invention the gasket is an O-ring.

Furthermore, in accordance with some embodiments of the present invention a face configured to matchingly covering a portion of the seat may comprise a profile stamped onto the face of the piston to interface with the gasket.

Furthermore, in accordance with some embodiments of the present invention, an interface between the gasket and the profile stamped on the face of the piston is configured to relate to a final sealing pressure of the gasket.

Furthermore, in accordance with some embodiments of the present invention an interface between a first component of the valve sealing assembly and a second component of the valve sealing assembly is configured to control a primary pressure on the gasket.

Furthermore, in accordance with some embodiments of the present invention the one or a plurality of grooves includes a drain hole configured to detect leakage from the gasket.

Furthermore, in accordance with some embodiments of the present invention the one or a plurality of grooves are configured to allow for uniform pressure on the gasket.

Furthermore, in accordance with some embodiments of the present invention the one or a plurality of grooves is configured to limit effects of temperature changes on the gasket's ability to seal.

Furthermore, in accordance with some embodiments of the present invention the gasket is configured to be clamped in the valve under a controlled pressure to avoid contamination.

Furthermore, in accordance with some embodiments of the present invention the one or a plurality of grooves are configured to limit movement of the gasket within the seat.

There is further provided, in accordance with some embodiments of the present invention a method for using a valve sealing assembly, the method including applying pressure to a valve seat comprising a gasket via a piston, wherein the gasket is configured to expand under pressure within one or a plurality of grooves, and wherein the piston has a face configured to matchingly cover a portion of the valve seat.

Furthermore, in accordance with some embodiments of the present invention, the gasket is an O-ring.

Furthermore, in accordance with some embodiments of the present invention, the pressure comprises a force of the piston.

Furthermore, in accordance with some embodiments of the present invention, the pressure comprises environmental pressures.

Furthermore, in accordance with some embodiments of the present invention, the expansion of the gasket is configured to create a tight seal in the valve.

### BRIEF DESCRIPTION OF THE DRAWINGS

In order to better understand the present invention, and appreciate its practical applications, the following Figures are provided and referenced hereafter. It should be noted that the Figures are given as examples only and in no way limit the scope of the invention. Like components are denoted by like reference numerals.
Fig. 1 is a schematic illustration of a cross section of a valve, including a valve sealing assembly, according to an embodiment of the invention;
Fig. 2 is a schematic illustration of a cross section of a valve sealing assembly within a valve, according to an embodiment of the invention;
Fig. 3 is a schematic illustration of a cross section of an O-ring seal within a valve assembly, according to an embodiment of the invention; and
Fig. 4 is a method of using a valve with a valve sealing assembly, according to an embodiment of the invention.

It will be appreciated that for simplicity and clarity of illustration, elements shown in the figures have not necessarily been drawn to scale. For example, the dimensions of some of the elements may be exaggerated relative to other elements for clarity. Further, where considered appropriate, reference numerals may be repeated among the figures to indicate corresponding or analogous elements.

### DETAILED DESCRIPTION OF EMBODIMENTS

In the following detailed description, numerous specific details are set forth in order to provide a thorough understanding of the methods and apparatus. However, it will be understood by those skilled in the art that the present methods and apparatus may be practiced without these specific details. In other instances, well-known methods, procedures, and components have not been described in detail so as not to obscure the present methods and apparatus.

Although the examples disclosed and discussed herein are not limited in this regard, the terms "plurality" and "a plurality" as used herein may include, for example, "multiple" or "two or more". The terms "plurality" or "a plurality" may be used throughout the specification to describe two or more components, devices, elements, units, parameters, or the like. Unless explicitly stated, the method examples described herein are not constrained to a particular order or sequence. Additionally, some of the described method examples or elements thereof can occur or be performed at the same point in time.

Unless specifically stated otherwise, as apparent from the following discussions, it is appreciated that throughout the specification, discussions utilizing terms such as "adding", "associating" "selecting," "evaluating," "processing," "computing," "calculating," "determining," "designating," "allocating" or the like, refer to the actions and/or processes of a computer, computer processor or computing system, or similar electronic computing device, that manipulate, execute and/or transform data represented as physical, such as electronic, quantities within the computing system's registers and/or memories into other data similarly represented as physical quantities within the computing system's memories, registers or other such information storage, transmission or display devices.

An aspect of the present invention is the provision of a valve with a novel sealing assembly. The valve according to an example of the invention, or the valve in which a sealing assembly according to an example of the invention is included, may take many forms as described below. According to embodiments of the invention a valve sealing assembly may include a seat with one or a plurality of grooves along a periphery of the seat. According to embodiments the seat includes a gasket inserted within one or a plurality of grooves, with a portion of the gasket raised above an external surface of the seat. According to embodiments a piston is also provided, having a face configured to matchingly cover a portion of and the seat and apply pressure to the gasket so as to cause expansion of the gasket within the groove or grooves, forming a tight seal between the gasket and the face of the piston.

A sealing assembly according to an example of the invention may be within a valve. In some embodiments of the invention, the valve may be configured to allow fluids to pass through between two or more pipes. The valve may be configured to temporarily prevent the passage of a fluid by way of a valve sealing assembly. The valve may be made from a metal, a plastic, a polymer other materials or a combination of materials.

Valves may be configured to regulate, control or otherwise direct the flow of fluids, solids, gasses, and other materials. A valve may regulate the flow of materials via the opening and/or closing, or in some embodiments of the invention, partially opening closing or otherwise obstructing a passage.

Valves may have one or a plurality of opening and closing positions. Valves may be configured to operate on a continuum between a fully closed position and a fully opened position. A valve according to an example of the invention, or the valve in which a sealing assembly according to the invention is included, may be a regulating, throttling metering and/or needle valve. In some examples, the valve may have sensors and/or indicators to show the degree to which a valve is opened, closed and/or allowing for the material and/or fluid to move, flow and/or otherwise travel through the valve. In some examples a flow rate of the fluid and/or material may be measured and/or indicated via flow meters.

The valve may be a normally closed, e.g., sampling valve or emergency shutdown valve or may be a normally open valve.

The valve may be multi-port valves including, for example, three-way ball valves, shuttle valves, single handle mixer valves, thermostatic mixing valves, and/or four port valves.

In some embodiments of the invention, the valve may be configured to operate in discrete positions, the discrete positions including opened and closed. In some embodiments of the invention, the fluid and/or material passing through the valve may move, flow and/or otherwise travel through the valve in a single direction. In some embodiments of the invention the material and/or fluid passing through the valve may move, flow and/or otherwise travel through the valve in a plurality of directions.

The valve may be configured such that a material travels from an area of higher pressure to an area of lower pressure. The valve may include or may be coupled to one or a plurality of pressure regulators, the pressure regulators configured to control flow of fluids and/or materials through the valve. The one or a plurality of pressure regulators may be a back-pressure regulator.

The valve may be controlled and/or actuated manually, automatically or semiautomatically. The valve may be controlled and or actuated via the use of one or a plurality of a lever, pedal, handle, wheel, and/or a combination thereof. Other methods may also be used to control the valve. The valve may be controlled and/or actuated hydraulically, pneumatically, via a motor, via a solenoid and/or via other means.

The valve may provide for one or a plurality of valve housings, including, angle valves, T-valves, inclined seat valves, loop valves, cross valves, changeover valves, tank outlet valves and other valves.

The valve may be configured to be used in a large, small or otherwise sized system. The valve may be configured to be used individually, in tandem with another similar or different valve or with multiple similar and/or different valves.

In some embodiments of the invention, the valve may include trim. Trim may include one or a plurality of the internal elements of the valve.

The valve may include a body. The body of the valve may include internal components of the valve. The valve, the valve body and one or a plurality of internal components of a valve may be made from one or a plurality of materials including, for example, metals such as bronze, copper, cast iron, steel, metal alloys, plastic, glass, synthetic materials, and/or other materials.

The valve may include corrosion resistant components. A valve may use materials that are configured to withstand extreme temperatures and/or pressure or other environmental conditions.

The valve may include a bonnet. The bonnet may be configured to cover the valve body and may be configured to maintain a configuration of parts and/or components of the valve. The bonnet may, in some examples, be removable for servicing of a valve.

The valve may include an actuator to regulate, control or otherwise direct the flow of fluids, solids, gasses, and other materials within the valve. The valve may, in some embodiments of the invention not have an actuator.

The valve may include a stem. The stem may be configured to transmit and/or to facilitate the transfer of linear or rotational force through a valve to open or close the valve. The stem may be coupled to the bonnet, the bonnet for example as described above. The stem may be configured with relation to the discs, the discs for example as described below such that the valve is normally seated, front seated, reverse-seated and/or backseated.

Valves according to an example of the invention, or the valves in which a sealing assembly according to an example of the invention is included, may include a seat, for example, as described herein below. The seat may be a component of the valve and may come in contact with a face of a piston and/or discs.

Discs may be obstructions, in some examples removable obstructions that may regulate, control or otherwise direct the flow of fluids, solids, gasses, and other materials within a valve. Discs may be a face of a piston within the valve. Discs may be configured in one or a plurality of sizes and/or shapes. In some embodiments of the invention a disc may rotate on a stem, hinge and/or trunnion. In some embodiments of the invention a disc may move linearly inside a valve.

The seat may constant or temporary contact with the face of the piston or the discs. For example, the seat may be configured to make a tight seal when a disc moves linearly to come in contact with the gaskets. In some examples, the disc may move rotationally and may be in continual contact with the seat and wherein the location of the disc in the valve and the area of contact of the disc with the seat relate to the nature of the seal in a valve. The valves may include a hard seat, wherein the seat may be integral to the valve seat. The valves may include a soft seat wherein the seat may be fitted to the valve and may be composed of an elastomeric material.

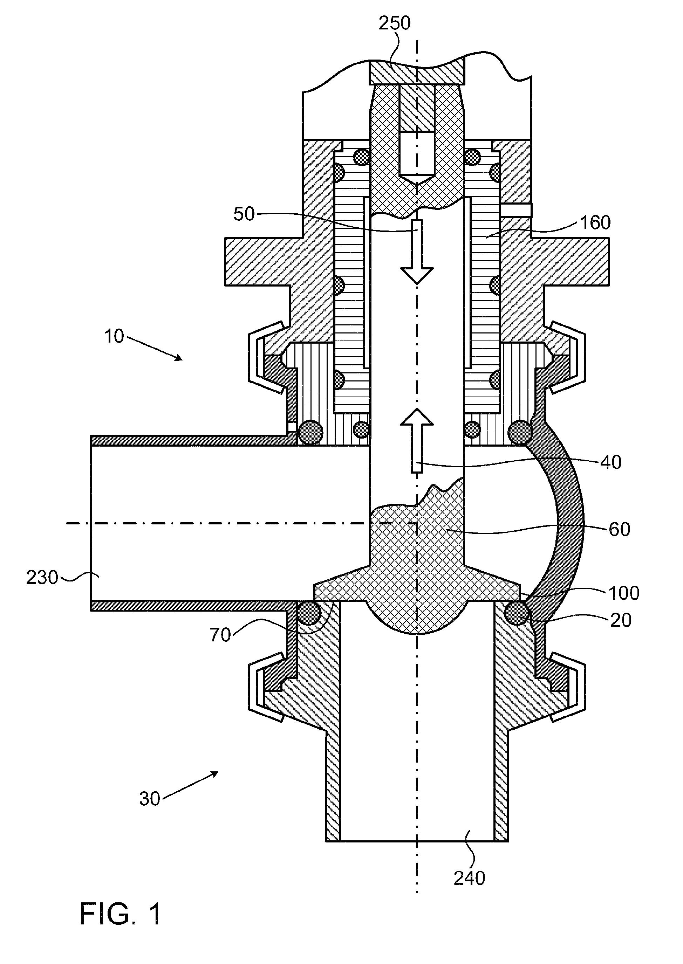

Fig. 1 is a schematic illustration of a cross section of a valve, including a valve sealing assembly, according to an embodiment of the invention.

Valve 10 may be configured for use in food and/or other industries. The use for valve 10 in the food or other industries that may necessitate a constantly or nearly consistently clean surface. Valve 10 may be configured to limit or prevent impurities from entering a system; the system may include one for chemical or food processing. Impurities may include sheared parts of an O-ring 20. Impurities may include particles that may get stuck in crevices within valve 10. Crevices, cracks and similar areas where small particles may get stuck may be found, in some embodiments of the invention near seals or near the area of O-ring 20.

Valve 10 may be configured to be easily flushed to maintain clean surfaces. Valve 10 may be configured to allow for interchangeability of parts. In some embodiments of the invention, O-ring 20 may be configured such that particles from O-ring 20 do not break away and/or enter a food or chemical system, the system incorporating one or a plurality of valves 10. O-ring 20 may be configures such that if O-ring 20 expands, it pushes overabundant volume out of crevices and prevents small particles from entering crevices and or other areas where small particles may get stuck or embedded within valve 10.

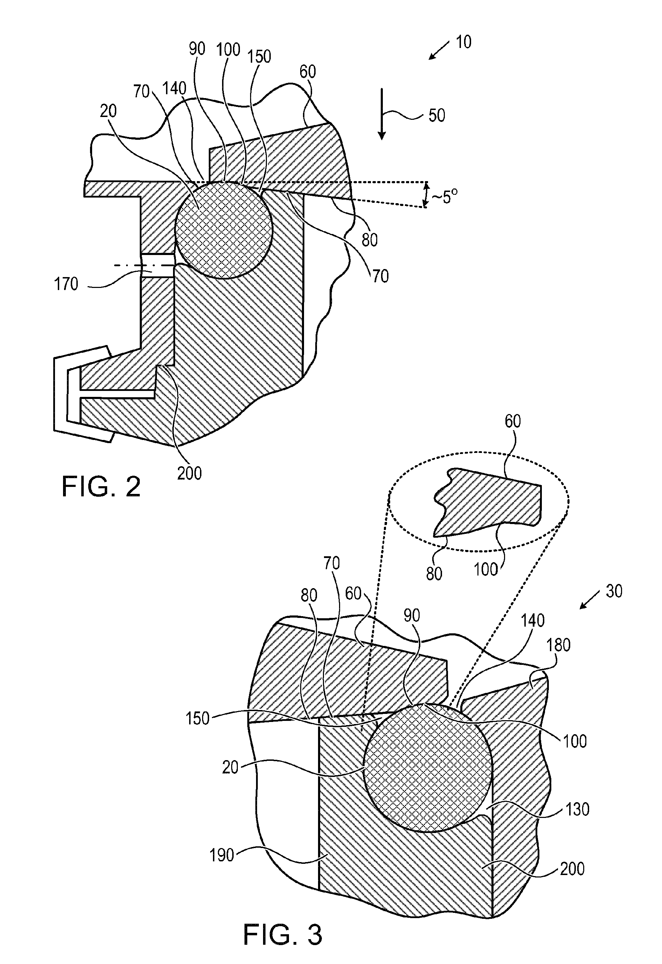

Piston 60 may be configured to work within valve 10. As described for example below with reference to Fig. 3, Valve 10 has a piston 60 and may be configured such that O-ring 20 sits below a face 100 of piston 60. Piston 60 may move in direction 40 and/or direction 50. Face 100 of piston 60 may be configured to facilitate a tight seal within valve 10. Face 100 may be configured to interface with other components of valve 10 to create a tight seal.

In some embodiments of the invention the closing of the valve may include the movement of piston 60 down onto a seat 70. Seat 70 may include O-ring 20. Seat 70 may include grooves that are configured to provide expansion spaces. When piston 60 sits on seat 70 forming a tight seal, fluid and/or media may not be able to pass through valve 10 from inlet 230 to outlet 240 or in the reverse direction. In some embodiments of the invention there may be one or a plurality of seats 70. In some embodiments there may be one or a plurality of inlets 230. In some embodiments of the invention there may be one or a plurality of outlets 240.

Piston 60 may be configured to be attached to stem 250. Stem 250 may connect piston 60 to a controlling mechanism, the controlling mechanism configured to control the flow through valve 10 from an inlet 230 to an outlet 240.

In some embodiments of the invention, a guide 160 may be configured to ensure that piston 60 is in a proper and/or suitable location throughout the operation of valve 10. In some embodiments of the invention, guide 160 may be configured to provide other services in valve 10.

Valve 10 and components thereof may be controlled via a processor. Valve 10 may include sensors. Valve 10 may be open and/or closes manually, automatically or semiautomatically. Valve 10 may be closed using an en electric, pneumatic or otherwise powered device. Valve 10 may be closed using manual power of a user. When the valve is in an open configuration, valve 10 may be configured to reduce the pressure drop on valve 10; valve 10 may be also configured to promote a laminar flow through valve 10 and/or through a larger system.

A disc of piston 60 may be at an end of piston 60, e.g., at a face 100, or may be between a first end and a second end of piston 60, such that piston 60 may extend past seat 70 when valve 10 is closed. The disc of piston 60 may interface with seat 70.

Valve 10 may include gaskets. Gaskets may be configured to prevent leakages within the valve. Gaskets may include one or a plurality of O-rings. An O-ring 20 may be a washer, a packing, a toric joint, or other similar devices. O-ring 20 may be a mechanical gasket and may be in the shape of a torus. O-ring 20 may include a loop of elastomer and may have with a round cross-section - the cross section, in some examples, resembling an 'O'. O-ring 20 may be configured and designed to be seated in a groove within valve 20. O-ring 20 may be designed and configured to be compressed, and in some examples, create a tight seal, during assembly between two or more parts within a valve. O-ring 20 may be designed and configured to be compressed, and in some examples, create a tight seal, when valve is closed. The use of O-ring 20 may create a seal at the interface a first component and a second component of the valve. The valve may have additional components compressing the O-ring.

O-ring 20 may be able to seal against tens of megapascals of pressure.

O-ring 20 may be configured to sit substantially within one or a plurality of grooves, the grooves providing expansion spaces for O-ring 20, as described, for example, hereinbelow. O-ring 20 may be configured to have a portion of the O-ring situated above a surface of the seat, to create a tight seal with a face 100 of a piston, face of a piston as described for example, above.

O-ring 20 may be an adaptive seal. O-ring 20 may adapt to different pressures. O-ring 20 may adapt to different temperatures and/or other environmental pressures. O-ring 20 may be a ring torus, toroid, toroidal shaped or nearly torodial shaped. O-ring 20 may be made from a terpolymer, e.g., a copolymer consisting of three distinct monomers. O-ring 20 may have elastomeric material properties. O-ring 20 may have other properties. O-ring 20 may be hollow. O-ring 20 may be solid within or may be semi-solid within. O-ring 20 may have an ISO 48:2010 value for hardness of vulcanized or thermoplastic rubbers - either standard-hardness or apparent hardness, of between 40 and 90 IRHD (International rubber hardness degrees), e.g., 70 IRHD.

O-ring 20 may have a tensile strength, as measured under the ISO37:2010 standard for tensile stress-strain properties of vulcanized and thermoplastic rubbers, measured in megapascals (MPa) of between 10 and 20 MPA, e.g., 15.8MPa.

O-ring 20 may have the ability to retain elastic properties after prolonged compression. As measured by the ISO815:2008 standard, O-ring 20 may have a compression set value of 12%.

In some embodiments the invention, O-ring 20 may be an elastomer such as ethylene-propelyne (EPDM), nitrile fluorocarbon (FKM) and/or silicone or other material. In some embodiments of the invention, the material used for O-ring 20 may depend on the type of fluid and/or other media within valve 10 and/or environmental conditions. O-ring 20 may comprise one or a plurality of other materials. In some embodiments of the invention O-ring 20 may have a thickness of 4mm more or less depend on valve sizes.. In some embodiments of the invention the minimum O-ring contact surface with fluid and/or media within valve 10 may be between 10% and 20% e.g., 15%. In some embodiments of the invention the minimum O-ring contact surface with fluid and/or media within valve 10 may be between 10% and 30%, e.g., 20%. In some embodiments of the invention, the size of the O-ring is between 2mm and 20 mm thick, e.g., 4mm with a diameter of between 10 mm and 50 mm, e.g., 30mm. In some embodiments of the invention, the size of O-ring 20 may depend on the size of valve 10.

The configuration of valve 10 and the configuration of O-ring 20 within valve 10 may limit the effects of temperature changes on O-ring 20 and/or the functionality of valve 10. O-ring housing area 30 may include one or a plurality of components, including, in some embodiments of the invention a groove that surrounds the periphery of the O-ring. O-ring may be described herein below, for example, with reference to Fig. 2.

Fig. 2 is a schematic illustration of a cross section of a valve sealing assembly within a valve, according to an embodiment of the invention.

In some embodiments of the invention, a valve 10 may include a seat 70. Seat 70 may include the surfaces of individual components of the valve assembly in valve 10 where a piston 60 comes in contact with the other components of the valve assembly in valve 10. Piston 60 also comes in contact with O-ring 20 and seat 70. Seat 70 may be a distinct component within valve assembly of valve 10. Seat 70 may be constructed from one or a plurality of materials, the materials may be the same or differ from the materials used in constructing other components of valve 10. Seat 70 may house O-ring 20.

Seat 70 may be as described herein below, for example, with regard to Fig. 3.

Seat 70 may include one a plurality of components, the one of a plurality of components forming a tight seal in conjunction with O-ring 20.

In some embodiments of the invention, a sealing pressure may be obtained such that the sealing pressure is related to an adaptable surface profile 90 of O-ring 20. The adaptable surface profile may mirror or match a profile stamped onto or otherwise incorporated into the area 100 of surface or face 80 of piston 60. Surface profile 90 may matchingly interface, cover or otherwise interact with area 100. Surface profile 90 may matchingly interface, cover or otherwise interact with a portion of area 100.

As piston 60 moves in direction 50, a pressure on the seal, in some embodiments of the invention, an optimal pressure on the seal, may be achieved between a surface 90 and surface 100 of face 80 of piston 60. Pressure of O-ring 20 may be sufficient to close valve 10 and prevent leakage.

In some embodiments of the invention, O-ring 20 may be configured such that the movement of piston 60 in direction 50 does not add tensional and/or shearing forces and/or and stresses that are unnecessary to O-ring 20. In some embodiments of the invention, O-ring 20 may be configured such that the movement of piston 60 in direction 50 does not add substantial tensional and/or shearing forces and/or and substantial stresses to O-ring 20. In some embodiments of the invention, O-ring 20 may be configured such that the movement of piston 60 in direction 50 does not provide for piston 60 to slide on and/or past O-ring 20.

In some embodiments of the invention, an expansion space 140, in some examples a portion of the groove, and an interaction with drain hole and drain space 170 may enable the detection of leakage from O-ring 20. In some embodiments of the invention sensors may be located in and/or around drain space 170 to report on leakages from O-ring 20.

In some embodiments of the invention, O-ring 20 may bulge and/or rise between 0.2 mm and 0.9 mm, e.g., 0.5 mm above seat 70 before it compressed. In some embodiments of the invention, O-ring 20 may be configured to contract so that in a contracted state O-ring is between 0.1mm and 0.8mm, e.g. 0.3 mm above seat 70 before it compressed.

Fig. 3 is a schematic illustration of a cross section an O-ring seal within a valve assembly, according to an embodiment of the invention.

In some embodiments of the invention, piston 60 with face 80 may have an area 100 on face 80 that is stamped or otherwise made to mirror or closely mirror an adaptable surface profile 90 of O-ring 20. In some embodiments of the invention, area 100 may be configured to interface with adaptable surface profile 90 of O-ring 20.

In some embodiments of the invention, O-ring 20 may be configured to respond to uniform pressure, the pressure in some embodiments provided by a piston 60, by expanding into spaces within the valve, including expansion space 130, expansion space 140 and expansion space 150. The three expansion spaces 130, 140 and 150 may be components within a seat of the valve, the seat as described, in some examples, above.

Other expansion spaces may also be included in valve 10. In some embodiments of the invention valve 10 there may be fewer expansion spaces. In some embodiments of the invention, O-ring 20 may expand into one or a plurality of the expansion spaces. O-ring may expand into one or a plurality of expansion spaces given a change in temperature or a change in pressure on O-ring 20 or in valve 10. In some embodiments of the invention, O-ring 20 may expand into one or a plurality of expansion spaces to limit and/or eliminate pressure when temperatures change within or outside of valve 10.

In some embodiments an expansion space may have a volume of between 40 mm³ to 120 mm³ e.g., 80 mm³. In some embodiments of the invention, a groove may include expansion space 130, expansion space 140 and expansion space 150. Expansion space 130, expansion space 140 and expansion space 150 may have the same or similar volume. In some embodiments of the invention, expansion space 130, expansion space 140 and expansion space 150 may have differing volumes.

In some embodiments of the invention expansion of O-ring 20 into one or a plurality of expansion spaces may avoid or limit the movement of O-ring 20 in a direction that may be detrimental to O-ring 20 and/or valve 10 or contaminate the valve.

In some embodiments of the invention O-ring 20 may be clamped in the body of valve 10 with a controlled pressure. O-ring 20 may be configured such that it interfaces with piston 60 such that similar profiles between O-ring 20 and piston 60, and or parts thereof, to create a strong and/or optimal pressure and seal valve 10.

In some embodiments of the invention, valve 10 is configured such that the opening and closing of valve 10, including the movement of piston 60 does not provide sufficient force or movement to shear O-ring 20. In some embodiments of the invention piston 60 is configured to rest on top, or nearly on top of O-ring 20 in some embodiments of the invention, seat 70 is configured with a drain slope, it may be angled between 2° and 10°, e.g., 5°, or more while valve 10 is closed. In some embodiments of the invention, piston 60, and/or parts thereof is configured to provide a final sealing pressure for O-ring 20 within valve 10.

In some examples of the invention a tight seal may be obtained between valve first component 180 and valve second component 190 using O-ring 20. Additional components may also have a tight seal as a result of O-ring 20 such that any contaminations cannot penetrate between valve first component 180 and valve second component 190. In some embodiments of the invention, a surface interface 200 between valve first component 180 and valve second component 190 may provide a defined mechanical stop for O-ring 20. In some embodiments of the invention, an interface between first component 180 and second component 190 may provide a primary pressure on O-ring 20. In some embodiments of the invention, sensors may be configured to be placed in or around the interface between first component 180 and valve second component 190 to detect and/or report on the primary pressure on O-ring 20. In some embodiments of the invention, a processor may be configured to control the pressure at the interface between first component 180 and valve second component 190.

In some embodiments of the invention a surface of piston 60 or face 80 of the piston may interface with a seat of valve 10 such that O-ring 20 is compressed and/or expands into expansion space 130, expansion space 140 and/or expansion space 150.

In some embodiments of the invention, a disc within valve 10 may interface with another seat, in addition to the seat describe above, of valve 10, such that O-ring 20 is compressed and/or expands into expansion space 130, expansion space 140 and/or expansion space 150.

The compression and/or expansion of O-ring 20 into expansion space 130, expansion space 140 and/or expansion space 150 by way of the downward and/or upward force of piston 60, and in some examples, the downward and/or upward force from the pressing down of the face 100 of piston 60 onto the seat of valve 10 may be configured such that the integrity of O-ring 20 is not minimized or is minimally minimized when the O-ring is compressed by face 100 and when face 100 of piston 60 is lifted off of the seat, for example, by the raising of the piston.

In some embodiments of the invention, O-ring 20 maybe positioned such that seat includes O-ring 20 positioned between first component 180 and second component 190.

Extracted portion of the figure, providing a close up view of piston 60 and face 80 of piston 60, indicates multiple distinctive areas 100 on face 80 where areas 100 are configured to matchingly correspond to surface profile 90. In some embodiments of the invention, some of areas 100 may be configured to matchingly correspond to surface profile 90, some areas may matchingly correspond to a profile of seat 70, and/o some areas 100 may correspond to a mixture of surface profile 90 and seat 70.

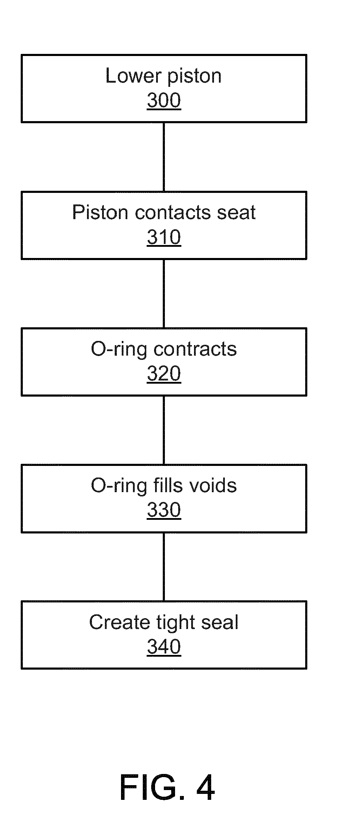

Fig. 4 is a method of using a valve with a valve sealing assembly, according to an embodiment of the invention.

In some embodiments of the invention, a valve may be configured to allow fluids to pass through said valve. The valve may be configured to temporarily prevent the passage of a fluid. The valve may be made from a metal, a plastic, a polymer other materials or a combination of materials.

The valve may provide for one or a plurality of valve housings, including, angle valves, T-valves, inclined seat valves, loop valves, cross valves, changeover valves, tank outlet valves, tank outlet valves and other valves.

The valve may be configured to be used in a large, small or otherwise sized system. The valve may be configured to be used individually, in tandem with another similar or different valve or with multiple similar and/or different valves.

The valve may be configured for use in food and/or other industries. The use of the valve in the food or other industries that may demand a constantly or nearly consistently clean surface. The valve may be configured to limit or prevent impurities from entering a system; the system may include one for chemical or food processing. Impurities may include sheared parts of the valve. Impurities may include particles that may get stuck in crevices within the valve, cracks and similar areas where small particles may get stuck may be found, in some embodiments of the invention near seals of the valve.

The valve may be closed such that fluids and/or other particles do not pass through. The closing of the valve includes the lowering of the piston in the direction of the seat, as depicted in box 300.

The lowered piston is configured to come into contact with the O-ring at a pressure, as depicted in box 310 .The pressure may be given. The O-ring is primarily deformed. The pressure may be optimized for the O-ring to form a tight seal in the valve.

) The lowered piston is configured to come into contact with the seat, which absorbs the remaining pressure of the piston, and to cause the O-ring at or near the seat to contract, as depicted in as box 320.

The expansion of the O-ring may also occur when there are temperature and/or other changes in the internal and/or external environment of the valve.

The expansion of the O-ring will cause the O-ring to deform and/or fill a groove containing expansion spaces within the O-ring housing, as depicted by box 330.

The deforming and/or filling expansion spaces within the groove within the O-ring housing, as depicted will keep a tight seal in the valve, as depicted by box 340.

Examples of the present invention may include apparatuses for performing the operations described herein. Such apparatuses may be specially constructed for the desired purposes, or may comprise computers or processors selectively activated or reconfigured by a computer program stored in the computers. Such computer programs may be stored in a computer-readable or processor-readable non-transitory storage medium, any type of disk including floppy disks, optical disks, CD-ROMs, magnetic-optical disks, read-only memories (ROMs), random access memories (RAMs) electrically programmable read-only memories (EPROMs), electrically erasable and programmable read only memories (EEPROMs), magnetic or optical cards, or any other type of media suitable for storing electronic instructions. It will be appreciated that a variety of programming languages may be used to implement the teachings of the invention as described herein. Examples of the invention may include an article such as a non-transitory computer or processor readable non-transitory storage medium, such as for example, a memory, a disk drive, or a USB flash memory encoding, including or storing instructions, e.g., computer-executable instructions, which when executed by a processor or controller, cause the processor or controller to carry out methods disclosed herein. The instructions may cause the processor or controller to execute processes that carry out methods disclosed herein.

Different embodiments are disclosed herein. Features of certain embodiments may be combined with features of other embodiments; thus certain embodiments may be combinations of features of multiple embodiments. The foregoing description of the embodiments of the invention has been presented for the purposes of illustration and description. It is not intended to be exhaustive or to limit the invention to the precise form disclosed. It should be appreciated by persons skilled in the art that many modifications, variations, substitutions, changes, and equivalents are possible in light of the above teaching. It is, therefore, to be understood that the appended claims are intended to cover all such modifications and changes as fall within the true spirit of the invention.

While certain features of the invention have been illustrated and described herein, many modifications, substitutions, changes, and equivalents will now occur to those of ordinary skill in the art. It is, therefore, to be understood that the appended claims are intended to cover all such modifications and changes as fall within the true spirit of the invention.

## Claims

1. A valve sealing assembly comprising:
a seat with one or a plurality of grooves along a periphery of the seat, the seat comprising a gasket inserted within the one or a plurality of grooves, with a portion of the gasket raised above an external surface of the seat; and,
a piston, having a first face configured to matchingly cover a portion of the seat and a second fact to matchingly cover a portion of the gasket, configured to apply pressure to the gasket to cause expansion of the gasket within the one or a plurality of grooves, forming a tight seal between the gasket and the face of the piston.

2. The valve sealing assembly of claim 1, wherein, the one or a plurality of grooves comprises three expansion spaces.

3. The valve sealing assembly of claim 1 or 2, wherein the gasket is an O-ring.

4. The valve sealing assembly of any of claims 1 to 3, wherein a face configured to matchingly covering a portion of the seat may comprise a profile stamped onto the face of the piston to interface with the gasket.

5. The valve sealing assembly of claim 4, wherein an interface between the gasket and the profile stamped on the face of the piston is configured to relate to a final sealing pressure of the gasket.

6. The valve sealing assembly of any of claims 1 to 5, wherein an interface between a first component of the valve sealing assembly and a second component of the valve sealing assembly is configured to control a primary pressure on the gasket.

7. The valve sealing assembly of any of claims 1 to 6, wherein the one or a plurality of grooves includes a drain hole configured to detect leakage from the gasket.

8. The valve sealing assembly of any of claims 1 to 7, wherein the one or a plurality of grooves are configured to allow for uniform pressure on the gasket.

9. The valve sealing assembly of any of claims 1 to 8, wherein the one or a plurality of grooves is configured to limit effects of temperature changes on the gasket's ability to seal.

10. The valve sealing assembly of any of claims 1 to 9, wherein the gasket is configured to be clamped in the valve under a controlled pressure to avoid contamination.

11. The valve sealing assembly of any of claims 1 to 10, wherein the one or a plurality of grooves are configured to limit movement of the gasket within the seat.

12. A method for using a valve sealing assembly, the method comprising:
applying pressure to a valve seat comprising a gasket via a piston,
wherein the gasket is configured to expand under pressure within one or a plurality of grooves; and
wherein the piston has a face configured to matchingly cover a portion of the valve seat.

13. The method of claim 12, wherein the gasket is an O-ring.

14. The method of claim 12 or 13, wherein the pressure comprises a force of the piston or environmental pressures.

15. The method of any of claims 12 to 14, wherein the expanding of the gasket is configured to create a tight seal in the valve.
